# FASCICULE DE BREVET EUROPEEN

(11) **EP 3 121 054 B1**
(45) Date de publication et mention de la délivrance du brevet: **21.10.2020**
(21) Numéro de dépôt: 16179866.5
(22) Date de dépôt: 18.07.2016
(51) Int. Cl.: B60L 1/02, B60L 3/04, H03K 17/10, H05B 3/00, H03F 3/217

(54) **PROCÉDÉ DE SÉCURISATION DU FONCTIONNEMENT D'UN DISPOSITIF CHAUFFANT**
VERFAHREN ZUR SICHERUNG DER BETRIEBSFUNKTIONEN EINER HEIZVORRICHTUNG
METHOD FOR SECURING THE OPERATION OF A HEATING DEVICE

(30) Priorité: 22.07.2015 FR 1556925
(43) Date de publication de la demande: 25.01.2017
(60) Demande divisionnaire: 20152097.0
(73) Titulaire: VALEO SYSTEMES THERMIQUES, 78320 Le Mesnil Saint-Denis (FR)
(72) Inventeur: RAULIN-GESTAS, Laetitia, 91440 BURES-SUR-YVETTE (FR); PUZENAT, Bertrand, 78180 MONTIGNY-LE-BRETONNEUX (FR)
(74) Mandataire: Tran, Chi-Hai

(56) Documents cités:
- WO-A1-2014/091389
- FR-A1- 3 013 003
- US-A1- 2014 145 664
- Infineon: "PROFET (TM) in Automotive Heating Systems", , novembre 2013 (2013-11), pages 1-20, XP055271898, Extrait de l'Internet: URL:http://www.infineon.com/dgdl/Automotiv e Heating Systems 2013_BR.pdf?fileId=db3a3043422231a90142233 5b4a50467 [extrait le 2016-05-11]
- Infineon: "High current PROFET BTS50080-1EGA Smart High-Side Power Switch One Channel, 5 m[Omega]", Automotive Datasheet V1.1, 16 août 2011 (2011-08-16), XP055271917, Extrait de l'Internet: URL:http://www.infineon.com/dgdl/Infineon- BTS50080-DS-v01_01-en.pdf?fileId=db3a30432 239cccd0122597028f96b76 [extrait le 2016-05-11]
- Infineon: "Application Note PROFET+ CURRENT SENSE What the designer should know", , 14 mars 2014 (2014-03-14), pages 1-34, XP055272197, Munich, Germany Extrait de l'Internet: URL:http://www.infineon.com/dgdl/Infineon- PROFET _Current_Sense-AN-v01_01-EN.pdf?fileId=db3 a3043414fd3ef014159cc21916c6a [extrait le 2016-05-12]

## Description

L'invention concerne un procédé de sécurisation du fonctionnement d'un dispositif chauffant, notamment bien que non exclusivement, un dispositif de chauffage d'un véhicule automobile.

### ARRIÈRE-PLAN DE L'INVENTION

On connait des dispositifs de chauffage de véhicules automobiles comprenant un élément chauffant monté dans circuit électrique comprenant un organe d'alimentation et généralement plusieurs interrupteurs commandés par une unité centrale entre un état ouvert et un état fermé en fonction d'un écart de température entre une température ambiante et une température de consigne.

Contrairement aux véhicules à moteur thermique, les moteurs des véhicules électriques ne dégagent pas une chaleur suffisante pour assurer un chauffage de l'habitacle du véhicule. Le chauffage d'un véhicule électrique est donc assuré par des résistances chauffantes reliées à un organe d'alimentation par l'intermédiaire de transistors commandés par une unité centrale. Pour assurer un confort des utilisateurs du véhicule, il est nécessaire que le chauffage ait une puissance importante, typiquement de l'ordre de 5 kW. Dans ces conditions les transistors commandés sont soumis à des contraintes thermiques importantes et il existe donc un risque de mise en court-circuit des transistors, ce qui entraîne un fonctionnement à pleine puissance du dispositif de chauffage avec un risque de déclenchement d'un incendie du véhicule. Infineon (www.infineon.com) produit des microprocesseurs conçus pour contrôler et surveiller le chauffage automobile, décrits dans les publications suivantes d'Infineon: PROFET in Automotive Heating Systems (publié 2013), et Application Note PROFET+ Current Sense, what the designer should know (publié 2014).

Pour éviter le déclenchement d'un incendie, il est connu de réaliser des circuits de chauffage comprenant plusieurs transistors commandés en série, typiquement deux transistors en série, et de réaliser les résistances chauffantes avec un matériau ayant un coefficient de température positif.

L'utilisation d'éléments à coefficient de température positif est satisfaisante du point de vue de sécurité en raison de la limitation de la chaleur générée. Toutefois, cette limitation de la chaleur générée entraîne un allongement du temps nécessaire pour amener l'habitacle à une température de confort.

### OBJET DE L'INVENTION

Un but de l'invention est de proposer un procédé de sécurisation permettant d'utiliser un élément chauffant générant une puissance importante tout en préservant la sécurité du véhicule.

### BRÈVE DESCRIPTION DE L'INVENTION

En vue de la réalisation de ce but, on propose selon l'invention un procédé de sécurisation du fonctionnement d'un dispositif chauffant comprenant un élément chauffant disposé dans un circuit électrique comprenant un organe d'alimentation et au moins un interrupteur commandé par au moins une unité centrale entre un état ouvert et un état fermé en fonction d'un écart de température entre une température ambiante et une température de consigne. Selon l'invention, le procédé comporte les étapes de commander de façon cyclique une ouverture de l'interrupteur commandé indépendamment de l'écart entre la température ambiante et la température de consigne, et de vérifier que le circuit électrique est effectivement interrompu, selon les caractéristiques supplémentaires de la revendication 1.

Ainsi dans le cas où un court-circuit survient, la vérification du circuit révèle la défaillance et le dispositif de chauffage est immédiatement mis hors service, soit manuellement, soit automatiquement.

Selon une version avantageuse de l'invention, en relation avec un circuit électrique comportant plusieurs interrupteurs commandés montés en série, le procédé comporte les étapes de commander alternativement une ouverture d'un premier interrupteur commandé, et d'un second interrupteur commandé indépendamment de l'écart entre la température ambiante et la température de consigne, et de vérifier que le circuit électrique est effectivement interrompu pour chacune des ouvertures d'un interrupteur.

On peut ainsi identifier de façon précise l'interrupteur défaillant.

Selon un aspect avantageux de cette version de l'invention, le procédé comporte les étapes préalables de commander l'ouverture simultanée de tous les interrupteurs commandés, et de vérifier que le circuit électrique est effectivement interrompu. Si le résultat de ce test est positif, cela signifie qu'au moins un des deux transistors est défaillant et il est possible d'interrompre le cycle de vérification, ce qui minimise l'interruption du cycle de chauffage.

Selon encore une autre version de l'invention, en relation avec un circuit électrique comportant plusieurs interrupteurs commandés montés en série, le procédé comporte les étapes de commander l'ouverture simultanée de tous les interrupteurs commandés, et de vérifier que le circuit électrique est effectivement interrompu. Si le résultat de ce test est positif, cela signifie qu'au moins un des deux transistors est défaillant. Cette vérification permet notamment de minimiser le temps d'interruption du cycle normal de chauffage tout en donnant une information utile sur le risque global de surchauffe.

Selon de l'invention, la vérification que le circuit électrique est effectivement interrompu, est réalisée en comparant une tension en un point du circuit avec une tension de référence pour ce même point du circuit.

Selon encore un aspect de l'invention, le procédé comporte en outre les étapes de commander de façon cyclique une fermeture de l'interrupteur commandé indépendamment de l'écart entre la température ambiante et la température de consigne, et de vérifier que le circuit électrique est effectivement fermé. En relation avec un circuit électrique comportant plusieurs interrupteurs commandés montés en série, le procédé comporte en outre les étapes de commander de façon cyclique une fermeture de l'ensemble des interrupteurs commandés en série indépendamment de l'écart entre la température ambiante et la température de consigne, et de vérifier que le circuit électrique est effectivement fermé. On s'assure ainsi que le dispositif est en ordre de marche.

Selon encore un autre aspect de l'invention, en relation avec un organe d'alimentation fonctionnant en modulation de largeur d'impulsion, le procédé de sécurisation est mis en œuvre pendant une durée inférieure à une période de la modulation de largeur d'impulsion, de préférence pendant une durée inférieure à un cinquième de la période de la modulation de largeur d'impulsion.

Selon encore un autre aspect de l'invention, en relation avec un organe d'alimentation fonctionnant en modulation de largeur d'impulsion, le procédé de sécurisation est mis en œuvre pendant une durée supérieure ou égale à une période de la modulation de largeur d'impulsion.

Selon l'invention le procédé de sécurisation est mis en œuvre à une fréquence inférieure à une fréquence de la modulation de largeur d'impulsion.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:
- La figure 1 est une représentation schématique d'un dispositif dans lequel l'invention est mise en œuvre,
- la figure 2 est une représentation schématique d'une variante de réalisation de l'élément chauffant auquel s'applique le procédé de l'invention,
- la figure 3 est une représentation schématique d'une autre variante de réalisation de l'élément chauffant auquel s'applique le procédé de l'invention.

### DESCRIPTION DETAILLÉE DE L'INVENTION

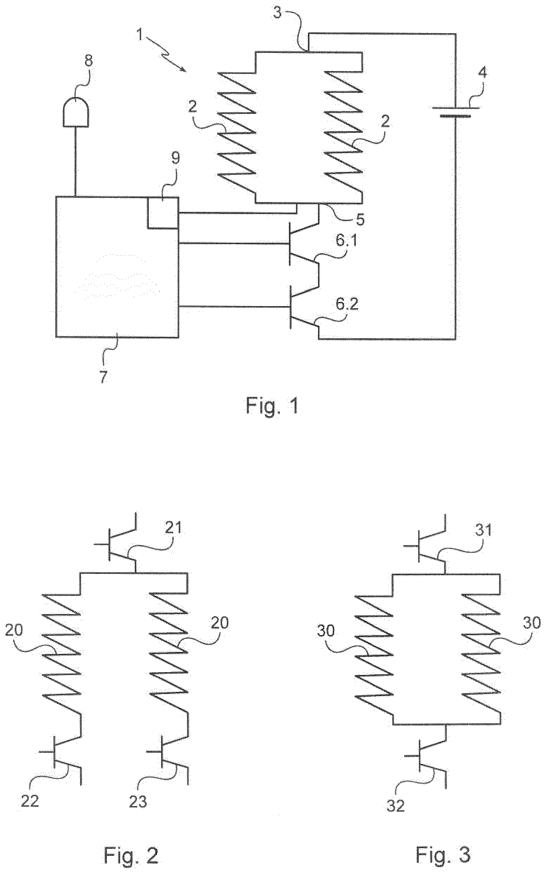

En référence à la figure 1, le dispositif chauffant auquel l'invention s'applique comprend de façon connue en soi un élément chauffant 1, qui dans le mode de réalisation illustré comporte deux résistances 2 montées en parallèle. Un des points de jonction 3 de l'élément chauffant est relié directement à un organe d'alimentation 4 tandis que l'autre point de jonction 5 est relié à l'organe d'alimentation 4 par l'intermédiaire de deux transistors, portant la référence globale 6 et les références particulières 6.1 et 6.2, montés en série et reliés à une unité centrale 7 pour réaliser des interrupteurs commandés entre les éléments chauffants et l'organe d'alimentation 4. Un capteur de température 8 est également relié à l'unité centrale 7 pour permettre la mise en œuvre du procédé habituel de régulation de chauffage par comparaison entre la température ambiante et une température de référence réglée par l'utilisateur.

Pour la mise en œuvre du procédé selon l'invention, l'unité centrale 7 contient un organe de mesure 9 d'une tension électrique qui est relié au point de jonction 5.

De façon également connue en soi le dispositif chauffant est mis en œuvre en découpant le courant dans l'élément chauffant selon une modulation de largeur d'impulsion c'est-à-dire avec un temps de conduction et un temps de non conduction, la période de la modulation de largeur d'impulsion étant égale à la somme du temps de conduction et du temps de non conduction. À titre d'exemple l'invention a été mise en œuvre en relation avec un découpage en modulation de largeur d'impulsion ayant une période de 500 ms, le pas (1/100) étant de 5 ms ce qui permet d'avoir un cycle de fonctionnement à 100 % sur une période de 500 ms.

Le procédé de vérification selon l'invention est mis en œuvre de façon cyclique indépendamment du cycle de fonctionnement du dispositif de chauffage, c'est-à-dire quel que soit l'écart entre la température ambiante et la température de consigne.

Dans son mode de mise en œuvre préféré, le procédé selon l'invention comprend quatre séquences de tests :
- Test 1 : ouverture de l'interrupteur 6.1 et de l'interrupteur 6.2 et mesure de la tension à la jonction 5. Si la tension est égale, aux erreurs de mesure près, à la tension nominale de l'organe d'alimentation 4, il est donc possible de passer directement au quatrième test,
- Test 2 : fermeture de l'interrupteur 6.1 et ouverture de l'interrupteur 6.2. Si la tension de la jonction 5 n'est pas égale à la tension nominale de l'organe d'alimentation, cela signifie que l'interrupteur 6.2 est en court-circuit.
- Test 3 : ouverture de l'interrupteur 6.1 et fermeture de l'interrupteur 6.2, et mesure de la tension au point de jonction 5. Si la tension n'est pas égale à la tension nominale de l'organe d'alimentation, ceci signifie que interrupteur 6.1 est en court-circuit.
- Test 4 : fermeture de l'interrupteur 6.1 et de l'interrupteur 6.2, et mesure de la tension au point de jonction 5. Si la tension est supérieure à zéro, aux tolérances de mesure près, ceci signifie que le circuit est défaillant par rupture en un point quelconque du circuit.

Si un seul interrupteur est en court-circuit, on peut prévoir une alarme de premier niveau invitant l'utilisateur à faire vérifier d'urgence le dispositif de chauffage. Si les eux interrupteurs commandés sont en court-circuit, on peut prévoir une mise hors service automatique du dispositif de chauffage, ou une alarme de second niveau enjoignant l'utilisateur d'interrompre le chauffage et/ou de se rendre au plus vite dans un garage.

Compte tenu de la puissance des éléments chauffants, il est nécessaire d'effectuer une vérification selon une périodicité aussi élevée que possible tout en minimisant la perturbation engendrée par les tests sur le fonctionnement normal du dispositif de chauffage. À titre d'exemple un fonctionnement en court-circuit pendant une période de 10 minutes engendre un risque important de début d'incendie dans le véhicule. Dans l'exemple de découpage en modulation de largeur d'impulsion décrit ci-dessus, le procédé de vérification a été mis en œuvre de façon cyclique toutes les 60 secondes et la durée de la vérification a été inférieure à 100 ms (c'est-à-dire inférieur à 1/5 de la période de modulation de largeur d'impulsion).

La figure 2 et la figure 3 illustrent des variantes de dispositif chauffant auxquelles le procédé de sécurisation selon l'invention peut être appliqué. Dans le cas de la figure 2 les résistances chauffantes 20 sont reliées en amont à un interrupteur unique 21 et en aval à deux interrupteurs 22 et 23, selon un montage en pseudo-parallèle.

Dans le cas de la figure 3, les résistances chauffantes 30 sont montées en parallèle et sont reliées en amont à un interrupteur unique 31 et en aval à un interrupteur unique 32.

Une variante de réalisation non illustrée propose un procédé de sécurisation pour un circuit électrique comportant au moins deux interrupteurs commandés chacun par une unité centrale entre un état ouvert et un état fermé en fonction d'un écart de température entre une température ambiante et une température de consigne caractérisé en ce qu'il comporte les étapes de commander de façon cyclique une ouverture de l'interrupteur commandé indépendamment de l'écart entre la température ambiante et la température de consigne, et de vérifier que le circuit électrique est effectivement interrompu. En outre, dans un tel mode de réalisation, des capteurs de température sont également respectivement reliés à chaque unité centrale pour permettre la mise en œuvre du procédé.

Ici, les étapes de commande de façon cyclique et de façon synchrone entre les interrupteurs ainsi que les étapes de vérifications sont maîtrisées par une des uité centrale dite maître grâce à un séquenceur interne logiciel.

Bien entendu ces variantes ne sont pas limitatives et l'invention est susceptible de variantes de réalisations qui apparaîtront à l'homme de métier sans sortir du cadre de l'invention telle que définie par les revendications.

En particulier, le procédé de vérification selon l'invention permet de détecter de façon quasi immédiate la mise en court-circuit de l'un des interrupteurs.

## Revendications

1. Procédé de sécurisation du fonctionnement d'un dispositif chauffant comprenant un élément chauffant (1) disposé dans un circuit électrique comprenant un organe d'alimentation (4) et au moins un interrupteur (6.1, 6.2) commandé par au moins une unité centrale (7) entre un état ouvert et un état fermé en fonction d'un écart de température entre une température ambiante et une température de consigne, ledit procédé comprenant en outre les étapes consistant à: commander de façon cyclique une ouverture de l'interrupteur commandé indépendamment de l'écart entre la température ambiante et la température de consigne, et de vérifier que le circuit électrique est effectivement interrompu lors de ladite ouverture cyclique dudit interrupteur, la vérification que le circuit électrique est effectivement interrompu étant réalisée en comparant une tension en un point du circuit avec une tension de référence pour ce même point du circuit, ledit organe d'alimentation (4) fonctionnant en modulation de largeur d'impulsion, **caractérisé en ce que** le procédé de sécurisation est mis en œuvre pendant une durée inférieure à une période de la modulation de largeur d'impulsion et à une fréquence inférieure à une fréquence de la modulation de largeur d'impulsion.

2. Procédé selon la revendication 1, en relation avec un circuit électrique comportant plusieurs interrupteurs commandés (6.1, 6.2) montés en série, **caractérisé en ce qu'**il comporte les étapes de commander alternativement une ouverture d'un premier interrupteur commandé (6.1), et d'un second interrupteur commandé (6.2) indépendamment de l'écart entre la température ambiante et la température de consigne, et de vérifier que le circuit électrique est effectivement interrompu pour chacune des ouvertures d'un interrupteur.

3. Procédé selon la revendication 2, **caractérisé en ce qu'**il comporte en outre les étapes préalables de commander l'ouverture simultanée de tous les interrupteurs commandés, et de vérifier que le circuit électrique est effectivement interrompu.

4. Procédé selon la revendication 1, en relation avec un circuit électrique comportant plusieurs interrupteurs commandés montés en série, **caractérisé en ce qu'**il comporte les étapes de commander l'ouverture simultanée de tous les interrupteurs commandés, et de vérifier que le circuit électrique est effectivement interrompu.

5. Procédé selon la revendication 1, **caractérisé en ce qu'**il comporte en outre les étapes de commander de façon cyclique une fermeture de l'interrupteur commandé indépendamment de l'écart entre la température ambiante et la température de consigne, et de vérifier que le circuit électrique est effectivement fermé.

6. Procédé selon la revendication 2, **caractérisé en ce qu'**il comporte en outre les étapes de commander de façon cyclique une fermeture de l'ensemble des interrupteurs commandés en série indépendamment de l'écart entre la température ambiante et la température de consigne, et de vérifier que le circuit électrique est effectivement fermé.

## Patentansprüche

1. Verfahren zur Sicherung des Betriebs einer Heizvorrichtung, die ein Heizelement (1) enthält, das in einem elektrischen Schaltkreis angeordnet ist, der ein Versorgungsorgan (4) und mindestens einen Schalter (6.1, 6.2) enthält, der von mindestens einer Zentraleinheit (7) abhängig von einer Temperaturabweichung zwischen einer Umgebungstemperatur und einer Solltemperatur zwischen einem offenen Zustand und einem geschlossenen Zustand gesteuert wird, wobei das Verfahren außerdem die Schritte enthält, die darin bestehen: eine Öffnung des gesteuerten Schalters unabhängig von der Abweichung zwischen der Umgebungstemperatur und der Solltemperatur zyklisch zu steuern und zu überprüfen, ob der elektrische Schaltkreis tatsächlich bei der zyklischen Öffnung des Schalters unterbrochen wird, wobei die Überprüfung, ob der elektrische Schaltkreis tatsächlich unterbrochen ist, durchgeführt wird, indem eine Spannung an einem Punkt des Schaltkreises mit einer Bezugsspannung für diesen gleichen Punkt des Schaltkreises verglichen wird, wobei das Versorgungsorgan (4) in Impulsbreitenmodulation arbeitet, **dadurch gekennzeichnet, dass** das Sicherungsverfahren während einer Dauer geringer als eine Periode der Impulsbreitenmodulation und mit einer Frequenz geringer als eine Frequenz der Impulsbreitenmodulation durchgeführt wird.

2. Verfahren nach Anspruch 1, in Verbindung mit einem elektrischen Schaltkreis, der mehrere in Reihe geschaltete gesteuerte Schalter (6.1, 6.2) aufweist, **dadurch gekennzeichnet, dass** es die Schritte der abwechselnden Steuerung eines Öffnens eines ersten gesteuerten Schalters (6.1) und eines zweiten gesteuerten Schalters (6.2) unabhängig von der Abweichung zwischen der Umgebungstemperatur und der Solltemperatur und der Überprüfung aufweist, dass der elektrische Schaltkreis tatsächlich bei jeder der Öffnungen eines Schalters unterbrochen wird.

3. Verfahren nach Anspruch 2, **dadurch gekennzeichnet, dass** es außerdem die vorhergehenden Schritte der Steuerung des gleichzeitigen Öffnens aller gesteuerten Schalter und der Überprüfung aufweist, dass der elektrische Schaltkreis tatsächlich unterbrochen ist.

4. Verfahren nach Anspruch 1, in Verbindung mit einem elektrischen Schaltkreis, der mehrere in Reihe geschaltete gesteuerte Schalter aufweist, **dadurch gekennzeichnet, dass** es die Schritte der Steuerung des gleichzeitigen Öffnens aller gesteuerten Schalter und der Überprüfung aufweist, dass der elektrische Schaltkreis tatsächlich unterbrochen ist.

5. Verfahren nach Anspruch 1, **dadurch gekennzeichnet, dass** es außerdem die Schritte der zyklischen Steuerung eines Schließens des gesteuerten Schalters unabhängig von der Abweichung zwischen der Umgebungstemperatur und der Solltemperatur und der Überprüfung aufweist, dass der elektrische Schaltkreis tatsächlich geschlossen ist.

6. Verfahren nach Anspruch 2, **dadurch gekennzeichnet, dass** es außerdem die Schritte der zyklischen Steuerung eines Schließens der Gesamtheit der in Reihe geschalteten gesteuerten Schalter unabhängig von der Abweichung zwischen der Umgebungstemperatur und der Solltemperatur und der Überprüfung aufweist, dass der elektrische Schaltkreis tatsächlich geschlossen ist.

## Claims

1. Method for securing the operation of a heating device comprising a heating element (1) arranged in an electrical circuit comprising a power supply member (4) and at least one switch (6.1, 6.2) controlled by at least one central unit (7) between an open state and a closed state according to a temperature difference between an ambient temperature and a setpoint temperature, said method further comprising the steps of: cyclically controlling an opening of the controlled switch independently of the difference between the ambient temperature and the setpoint temperature, and of checking that the electrical circuit is actually opened during said cyclic opening of said switch, the check that the electrical circuit is actually opened is performed by comparing a voltage at a point of the circuit with a reference voltage for this same point of the circuit, said power supply member (4) operating in pulse width modulation mode, **characterized in that** the securing method is implemented for a duration less than a period of the pulse width modulation and at a frequency lower than the pulse width modulation frequency.

2. Method according to Claim 1, in relation to an electrical circuit comprising several controlled switches (6.1, 6.2) connected in series, **characterized in that** it comprises the steps of alternately controlling an opening of a first controlled switch (6.1), and of a second controlled switch (6.2) independently of the difference between the ambient temperature and the setpoint temperature, and of checking that the electrical circuit is actually opened for each of the openings of a switch.

3. Method according to Claim 2, **characterized in that** it further comprises the preliminary steps of controlling the simultaneous opening of all the controlled switches, and of checking that the electrical circuit is actually opened.

4. Method according to Claim 1, in relation to an electrical circuit comprising several controlled switches mounted in series, **characterized in that** it comprises the steps of controlling the simultaneous opening of all the controlled switches, and of checking that the electrical circuit is actually opened.

5. Method according to Claim 1, **characterized in that** it further comprises the steps of cyclically controlling a closure of the controlled switch independently of the difference between the ambient temperature and the setpoint temperature, and of checking that the electrical circuit is actually closed.

6. Method according to Claim 2, **characterized in that** it further comprises the steps of cyclically controlling a closure of all the controlled switches in series independently of the difference between the ambient temperature and the setpoint temperature, and of checking that the electrical circuit is actually closed.
